# EUROPEAN PATENT SPECIFICATION

(11) **EP 1 876 286 B1**
(45) Date of publication and mention of the grant of the patent: **07.09.2011**
(21) Application number: 06731168.8
(22) Date of filing: 05.04.2006
(51) Int. Cl.: D06M 10/00, D06M 15/41, D06M 15/693, D02G 3/36, D02G 3/48, D06M 10/08, D06M 10/10, D06M 15/55, C08J 5/06, C08J 5/04

(54) **METHOD OF MODIFYING ORGANIC FIBER CORD**
VERFAHREN ZUR MODIFIZIERUNG VON KORD AUS ORGANISCHER FASER
PROCEDE DE MODIFICATION D'UN CORDON EN FIBRES ORGANIQUES

(30) Priority: 27.04.2005 JP 2005129416; 13.05.2005 JP 2005141593
(43) Date of publication of application: 09.01.2008
(73) Proprietor: Bridgestone Corporation, Tokyo 104-8340 (JP)
(72) Inventor: KOGA, Hiroshi, BRIDGESTONE CORPORATION, Kodaira-shi, Tokyo 187-8531 (JP); YOTSUMOTO, Toshihiro, BRIDGESTONE CORPORATION, Kodaira-shi, Tokyo 187-8531 (JP)
(74) Representative: Whalley, Kevin
(86) International application number: PCT/JP2006/307220
(87) International publication number: WO 2006/117964

(56) References cited:
- DE-A1- 19 853 866
- GB-A- 980 819
- JP-A- 01 045 627
- JP-A- 04 352 879
- JP-A- 09 067 730
- JP-A- 61 019 880
- JP-A- 63 165 545
- JP-A- 2005 280 348
- JP-A- 2006 068 689
- JP-A- 2006 097 155
- US-A1- 2003 060 540

## Description

### TECHNICAL FIELD

This invention relates to a method for modifying an organic fiber cord (hereinafter may be referred to as "cord" and "modification method" simply), and more particularly to a modification method for giving appropriate properties and adhesiveness to rubber to an organic fiber cord formed by twisting organic fibers and used for reinforcing a tire or the like.

### BACKGROUND ART

The organic fiber cord of polyester, polyamide (nylon) or the like used as a reinforcement for rubber articles such as a tire is usually modified by dipping into an adhesive liquid such as resorcin-formalin / rubber latex (RFL) liquid or the like, drying and subjecting to a heat treatment for the purpose of ensuring an adhesion to rubber, whereby cord performances desired as a reinforcing cord are obtained. US 2003/0060540 discloses a known process for producing tire cords.

In the drying and heat-treating steps for modifying the cord, there has hitherto been used a method wherein the organic fiber cords are exposed to a high heating temperature in an oven under a suitable tension for a constant time so as to meet with properties desired every each fiber to be treated. GB 980819 discloses drying cord fabrics using infra-red radiation of long wavelength.

### DISCLOSURE OF THE INVENTION

In the conventional cord-modifying method using the oven at the drying and heat-treating steps, however, air having a low thermal conductivity is used as a heat medium, so that there are various problems, e.g. (1) a problem that since the treating speed cannot be raised in the existing apparatus from a viewpoint of the efficiency, there is a restriction in the productivity and also the fibers may be deteriorated due to the increase of the treating time, (2) a problem that if it is intended to enhance the productivity, the enlargement of the apparatus is caused and hence a space, a cost (equipment investment, process cost and dipped cord) and an amount of a scrap (retaining portion in a furnace) at a switching period are increased, and so on. Therefore, it is demanded to develop a modification technique wherein the modification of the cord can be efficiently conducted in a short time without causing the above problems to obtain cords having desired performances.

It is, therefore, an object of the invention to provide a method for modifying an organic fiber cord wherein the modification of the properties can be carried out at a high speed to minimize the deterioration of the fiber during the treatment and the modified cord having desirable cord properties can be obtained surely and efficiently.

The inventors have made various studies and discovered that the drying of the cord dipped with an adhesive can be efficiently conducted in a short time by applying a drying device using microwaves to the drying step and that the modification of the cord can be attained in a short time by applying a far-infrared ray irradiation device to the heat-treating step, and as a result the invention has been accomplished.

That is, the method for modifying the organic fiber cord according to the invention is a method for modifying an organic fiber cord for tire reinforcement formed by twisting organic fibers, which comprises a step of dipping the organic fiber cord into an adhesive, a step of drying the dipped organic fiber cord and a step of heat-treating the dried organic fiber cord to modify it, wherein the drying step is conducted by irradiating microwaves to the dipped organic fiber cords.

Also, another method for modifying the organic fiber cord according to the invention is a method for modifying an organic fiber cord for tire reinforcement formed by twisting organic fibers, which comprises a step of dipping the organic fiber cord into an adhesive, a step of drying the dipped organic fiber cord and a step of heat-treating the dried organic fiber cord to modify it, wherein the heat-treating step is conducted by irradiating far-infrared rays to the dried organic fiber cord.

Also, the other method for modifying the organic fiber cord according to the invention is a method for modifying an organic fiber cord for tire reinforcement formed by twisting organic fibers, which comprises a step of dipping the organic fiber cord into an adhesive, a step of drying the dipped organic fiber cord and a step of heat-treating the dried organic fiber cord to modify it, wherein the drying step is conducted by irradiating microwaves to the dipped organic fiber cord and the heat-treating step is conducted by irradiating far-infrared rays to the dried organic fiber cord.

Although the invention is not particularly limited, it is particularly preferable when 1-250 single cords not having a weft are simultaneously modified as the organic fiber cord. In the invention, it is also preferable that an amount of the adhesive attached in the dipping step is controlled to a constant amount by aspirating the adhesive attached to the organic fiber cords by the dipping. Also, it is preferable that an amount of moisture in the organic fiber cords after the drying is controlled to be not more than 0.1 % as a moisture content by measuring the moisture content after the drying step and automatically varying an output power of the microwaves. Furthermore, it is preferable that hot air is forcedly circulated in a heat-treating furnace used in the heat-treating step to control an output power of the far-infrared rays through a temperature in the furnace.

According to the modification method of the invention, the modification and adhesion process for the cord can be evenly conducted at a high speed by taking the above construction, whereby the modified cords having desirable cord properties can be obtained efficiently. Also, the treating time can be shortened to about 1/12-1/30 in the drying step and about 1/2-1/8 in the heat-treating step while keeping the properties such as basic properties of the cord, adhesiveness, durability and the like as compared with the conventional method, so that it is possible to control the deterioration of the cord and fibers during the treatment at minimum and further there is a merit that a space for the apparatus can be decreased.

As mentioned above, the inventors have discovered that the method using the far-infrared rays is effective to more improve the efficiency of the heat-treating process at a high temperature. However, the heating by far-infrared rays is usually conducted by heating a nichrome wire or the like embedded in a ceramic plate through the supply of a voltage to transfer heat, so that there is a problem that an energy cost is increased. The inventors have further examined this problem and discovered that the ceramic plates are disposed on both sides of the cord in the heat-treating furnace and further the method of circulating hot air as a conventional means is applied and hence there can be utilized far-infrared rays generated when the ceramic plates are heated by hot air heated at the predetermined temperature without directly supplying a voltage to the ceramic plate, whereby the modifying process can be efficiently conducted at a high speed and the deterioration of the fibers during the treatment can be suppressed by the shortening of the heat-treating time and the increase of the energy cost accompanied with the use of far-infrared rays can be controlled.

In the method for modifying the organic fiber cord according to the invention, therefore, it is preferable that the heat-treating step is conducted by using a far-infrared ray-treating furnace comprising a hot air generator and a ceramic plate and irradiating far-infrared rays to the dried organic fiber cords. In this case, the deterioration in the strength of the cord is suppressed as much as possible by suppressing the deterioration of the fibers, whereby the properties and adhesiveness suitable for using as a reinforcing member of a tire or the like can be obtained in a short time. Concretely, the desired basic properties of the cord, adhesiveness and durability can be obtained while shortening the heat-treating time to 1/8-3/4 of the conventional one. Moreover, a request for saving energy can be also satisfied.

### BRIEF DESCRIPTION OF THE DRAWINGS

FIG. 1 is a schematic view showing a construction of an equipment for modifying an organic fiber cord in one preferable embodiment according to the invention.
FIG. 2 is a schematic view showing a construction of an equipment for modifying an organic fiber cord in another preferable embodiment according to the invention.
FIG. 3 is a schematic and illustrative view showing an outline of a far-infrared ray-treating furnace suitable for carrying out the invention.
FIG. 4 is a schematic view showing a construction of the conventional equipment for modifying an organic fiber cord.

### BEST MODE FOR CARRYING OUT THE INVENTION

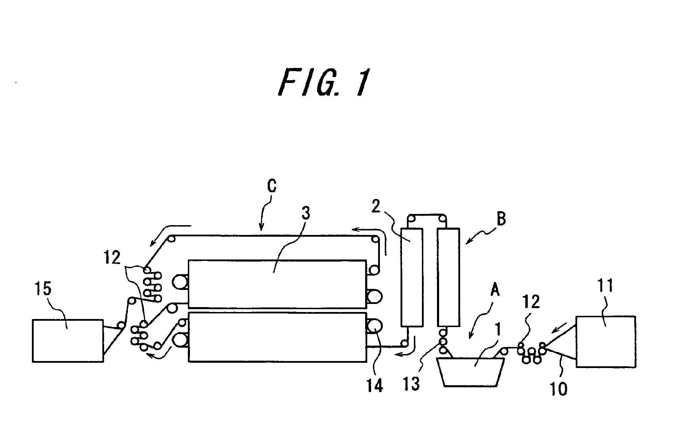

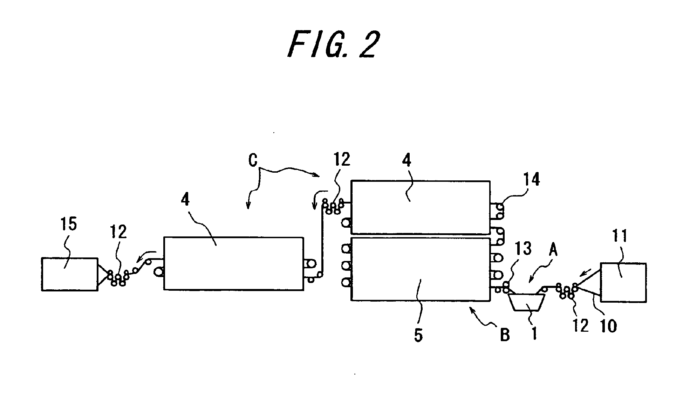

A preferable embodiment according to the invention will be described in detail below. In FIGS. 1 and 2 is shown an equipment for modifying the organic fiber cord in the preferable embodiment according to the invention. The invention is the method for modifying the organic fiber cord formed by twisting the organic fibers and used for reinforcing a tire, which comprises a step (A) of dipping an organic fiber cord 10 into an adhesive, a step (B) of drying the dipped organic fiber cord and a step (C) of heat-treating the dried organic fiber cord to modify it, as shown in FIGS. 1 and 2.

In the invention, it is preferable that the drying step (B) is conducted by irradiating microwaves to the dipped organic fiber cord. By using the microwaves can be conducted the drying of the dipped adhesive in a short time of about 1/12-1/30 as compared with the conventional time and the deterioration in the strength of the original twisted cord can be suppressed as far as possible, so that there can be efficiently obtained the high-performance modified cord having properties suitable as a reinforcing member for a tire.

The irradiation condition of the microwaves is not particularly limited as far as a moisture can be sufficiently vaporized from the dipped organic fiber cord, and can be set according to the purpose. For example, the output power of the microwaves can be properly set based on the amount of moisture per unit time in the drying. Also, it is preferable that in order to enhance the drying efficiency, steam is discharged outside of the apparatus by co-using a hot air or warm air generator in the drying so that the interior of the drying furnace does not form an excessive saturated state with the steam generated by the vaporization.

In the invention, the same effect as in the use of the microwaves can also be obtained by irradiating far-infrared rays to the dried organic fiber cord at the heat-treating step (C). Particularly, the speed of the adhesive reaction controlling the rate of the heat-treating step can be improved by irradiating the far-infrared rays to conduct the heat treatment, so that the time required for the treatment can be shortened to about 1/2-1/8 as compared with the conventional time, whereby the deterioration in the cord properties due to the deterioration of the fibers during the treatment can be suppressed and also the desired adhesiveness suitable for reinforcing the tire can be surely ensured.

Also, the irradiation condition of the far-infrared rays is not particularly limited as far as the modification treatment can be carried out properly, and can be set according to the purpose. Further, it is preferable that air is circulated with a fan in the treatment in order to enhance the thermal efficiency by heating the inside of the heat-treating furnace to the predetermined temperature and homogenizing the temperature distribution. Moreover, it is also preferable that hot air is forcedly circulated in the heat-treating furnace to control the output power of the far-infrared rays through a temperature inside the furnace.

In the invention, it is particularly preferable that the heat-treating step (C) is conducted by using a far-infrared ray-treating furnace comprising a hot air generator and a ceramic plate to irradiate the far-infrared rays to the dried organic fiber cord. The problem of increasing the energy cost can be also solved by using the far-infrared ray-treating furnace comprising the hot air generator and the ceramic plate.

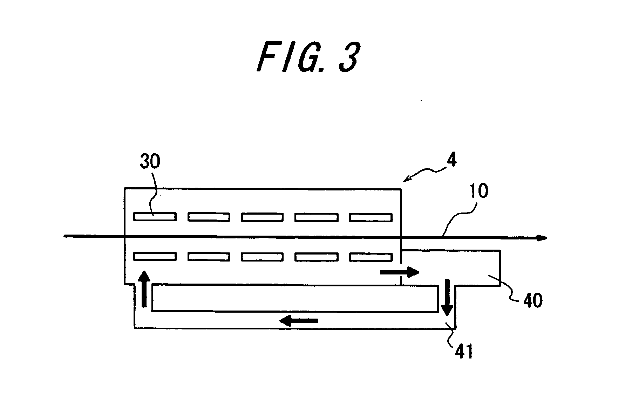

The outline of the far-infrared ray-treating furnace 4 suitable for carrying out the invention is shown in FIG. 3. In the far-infrared ray-treating furnace 4 according to the invention, as shown in FIG. 3, ceramic plates 30 are disposed along the organic fiber cord 10 to be treated and also a hot air generator 40 is installed, wherein the heat-treating step (C) is conducted by generating hot air, for example, by a combustion of a gas in the hot air generator 40 and transferring and circulating the hot air into the far-infrared ray-treating furnace 4. Moreover, numeral 41 in the figure shows a pipe arrangement for circulating the hot air.

The specification of the far-infrared ray-treating furnace suitable for carrying out the invention is not particularly limited as far as it comprises the hot air generator and the ceramic plate, and a commercially available apparatus can be properly used. As a material of the ceramic plate can be used commercially available far-infrared irradiation ceramics, but oxide-based ceramics such as alumina, beryllia, zirconia, magnesia, mullite, forsterite and so on are preferable.

In the invention, particularly when the drying step (B) is conducted by irradiating the microwaves and the heat-treating step (C) is conducted by irradiating the far-infrared rays, the high-performance modified cord can be obtained most efficiently. When the treating conditions such as temperature, tension and so on are the same as the conventional ones, the basic properties of the cord, adhesiveness and durability equal to or more than the conventional ones can be attained and the treating time can be shortened. Moreover, in the modification method according to the invention, there is a merit that the same productivity as in the conventional treating apparatus can be obtained even in the smaller apparatus.

The predetermined effects can be obtained in the invention as far as the above conditions are satisfied in the drying step (B) and/or the heat-treating step (C). For example, it is preferable that the amount of the adhesive attached is controlled to a constant amount by aspirating the adhesive attached to the organic fiber cord by the dipping in the dipping step (A). Concretely, the attached amount is controlled by providing a vacuum apparatus in the dipping equipment and aspirating the surface of the dipped organic fiber cord to remove the adhesive excessively attached thereto. In this way, a constant amount of the adhesive is always attached to the organic fiber cord at the dipping step (A), whereby it is made possible to prevent the local drying fault at the subsequent drying step (B), the cord breaking due to the melting of the cord through thermal drying and the occurrence of an unevenness in the heat-treating step (C). Particularly, when the single cord is dipped, the attached amount tends to be excess, so that it is more effective to control the amount by using the vacuum apparatus.

In the invention, it is also preferable that the amount of moisture in the dried organic fiber cord is measured after the drying step (B) and an output power of the microwaves is automatically varied to control the moisture amount, which can prevent the drying fault more effectively. In this case, the measurement of the moisture amount can be carried out by disposing a commercially available non-contact type moisture content measuring apparatus (e.g., Process moisture meter ST-2200A from Advanced Technology Corporation) at an outlet of the apparatus used in the drying. Moreover, the modification in the invention is preferably carried out while preventing the moisture content of the organic fiber cord from being not higher than 0.1%, i.e., keeping the moisture content of the organic fiber cord over 0.1%. When the organic fiber cord is under an absolute dry condition, the cord itself absorbs the microwaves to raise the temperature thereof and may cause the cord breaking due to the melting of the cord.

The modification method according to the invention is particularly effective to modify a single cord not having a weft rather than a cloth woven in the shape of blind as the organic fiber cord. According to the invention, for example, about 1-250 single cords can be simultaneously modified.

The modification method according to the invention is not particularly limited, but can be carried out by using the modifying equipment having a constitution as shown, for example, in FIGS. 1 and 2.

In the modifying equipment shown in FIG. 1, an organic fiber cord 10 taken out from a winding apparatus 11 is dipped into a dipping bath 1 through a pull roll 12 to apply an adhesive (dipping step (A)), and the amount of the adhesive attached is controlled by using a squeeze roll 13 and, if necessary, a vacuum apparatus (not shown), and then the drying is conducted by a microwave-heating apparatus 2 (drying step (B)). Then, the dried organic fiber cord 10 is heat-treated and modified in a far-infrared ray-heating furnace 3 while circulating through pass rolls 14 and pull rolls 12 (heat-treating step (C)) and wound through the pull roll 12 on a winding apparatus 15. Thus, the modified cord having desired cord properties can be obtained by conducting the modifying treatment while applying a proper tension with the pull rolls.

Also, in the modifying equipment shown in FIG. 2, the organic fiber cord 10 taken out from the winding apparatus 11 is coated with the adhesive by dipping into the dipping bath 1 through the pull roll 12 (dipping step (A)), and the amount of the adhesive attached is controlled by using the squeeze roll 13 and, if necessary, the vacuum apparatus (not shown), and then the drying is conducted by a drying apparatus 5 (drying step (B)). Then, the dried organic fiber cord 10 is heat-treated and modified in a far-infrared ray-treating furnace 4 while circulating through the pass rolls 14 and the pull rolls 12 (heat-treating step (C)) and wound through the pull roll 12 on the winding apparatus 15. Thus, the modified cord having desirable cord properties can be obtained by conducting the modifying treatment while applying a proper tension with the pull roll.

The organic fiber cord to be treated in the invention is not particularly limited and various cords can be used. As the fibrous material are concretely mentioned polyamides such as nylon, aramid and so on, polyesters such as polyethylene naphthalate (PEN), polyethylene terephthalate (PET) and so on, rayon, polyketone, vinylon and the like, and there can be used any twisted cord which can be used for reinforcing a tire, a belt conveyer and so on.

### <EXAMPLES>

The invention will be described in detail with reference to some examples below.

### (Examples 1-7)

In the modifying equipment having the construction shown in FIG. 1, the organic fiber cord is subjected to a modification treatment by using the following apparatus and the treating conditions (exposure time) shown in Tables 1-3, respectively.
- Dipping step (A): Dipping bath 1 (together with a vacuum apparatus)
- Drying step (B): Microwave generator 2 (TMG-490C (water-cooling type) manufactured by Shibaura Mechatronics Corporation, wavelength: 2450 MHz, output power: 5 kW/m) (together with a hot air generator)
- Heat-treating step (C): Far-infrared heater 3 (output power: 32 kW/m) (together with a circulation fan)

### (Comparative Examples 1-7)

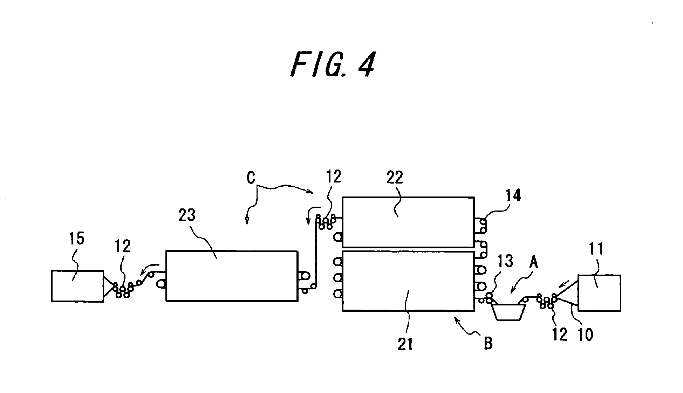

In the modifying equipment using a gas heating furnace having a construction shown in FIG. 4, the organic fiber cord is modified. Each of the treating conditions (temperature x tension applied to the cord) is varied in a material of each cord, a drying zone 21 and heat-treating zones 22, 23 as mentioned below. Also, each of the exposure times is in accordance with conditions shown in the following Tables 1-3.
- In the case of PET: (Drying zone 21) 160°C × 0.227 g/dtex, (Heat-treating zones 22, 23) 240°C × 0.227 g/dtex
- In the case of Nylon 66: (Drying zone 21) 140°C × 0.727 g/dtex, (Heat-treating zones 22, 23) 235°C × 0.727 g/dtex
- In the case of Rayon: (Drying zone 21) 140°C × 0.227 g/dtex, (Heat-treating zones 22, 23) 180°C × 0.227 g/dtex

### (Examples 8-11)

In the modifying equipment having the construction shown in FIGS. 2 and 3, the organic fiber cord is modified by using the following apparatus and the heat-treating conditions (exposure time) shown in Tables 4 and 5, respectively.
- Dipping step (A): Dipping bath 1
- Drying step (B): Steam heater 5
- Heat-treating step (C): Far-infrared rays-treating furnace 4 comprising a hot air generator, a circulation fan and ceramic plates (see FIG. 3, but the circulation fan is not shown therein.)

### (Comparative Examples 8-11)

In the modifying equipment having the same construction as shown in FIG. 2, the organic fiber cord is modified by using the gas heating furnace in the drying step (B) and heat-treating step (C). Each of the treating conditions (temperature x exposure time (treating time) x tension applied to the cord) is varied in a material of each cord, the drying step (B) and two heat-treating steps (C) as mentioned below. Also, each of the exposure times in the heat-treating step (C) is in accordance with conditions shown in the following Tables 4 and 5.
- In the case of PET: (Drying step (B)) 160°C × 40 seconds × 0.227 g/dtex, (Heat-treating step (C)) 240°C × 0.227 g/dtex
- In the case of Nylon 66: (Drying step (B)) 140°C × 60 seconds × 0.727 g/dtex, (Heat-treating step (C)) 235°C × 0.727 g/dtex

With respect to the modified cord obtained from each of the examples and comparative examples, properties are evaluated according to the following methods. These results are shown in the following Tables 1-5. As to the examples 1-7 and comparative examples 1-7, a value (average value, n=5) of a moisture content after the drying is also shown in Tables 1-3.

### 1) The elongation under a constant load and the breaking strength (the intermediate tension and strength of the dipped cord)

A tensile test to the dipped cord is conducted according to JIS L 1017 with using an autograph manufactured by Shimadzu Corporation to determine the elongation (%) under a constant load of 2.02 g/dtex and the breaking strength. As to the denier of the cord used herein, a fineness based on corrected mass in JIS L 1017 is used concerning an original yarn.

### 2) The thermal shrinkage factor

The dipped cord is applied with 50 g of initial load and left in an oven of 177°C for 30 minutes, the length after the shrinkage is divided with the original length and shown by a percentage.

### 3) The adhesive force

The resulting dipped cord is embedded in a rubber and vulcanized at the predetermined temperature and pressure, and then a force for pulling out it from the rubber is defined as an adhesive force. The results are shown by an index on the basis that the Comparative Example 1 is 100 in Table 1, the Comparative Example 3 is 100 in Table 2, the Comparative Example 5 is 100 in Table 3, the Comparative Example 8 is 100 in Table 4 and the Comparative Example 10 is 100 in Table 5. The larger the value, the better the result.

In each of the examples and comparative examples, the twisted cord made of the following three kind of material is used. The intermediate elongation, strength and thermal shrinkage factor of each twisted cord are measured in the same manner as in the dipped cord. Moreover, RFL adhesive liquid commonly used in a cord for reinforcing a tire is used as an adhesive liquid.

### Examples 1-3, 8 and 9, and Comparative Examples 1, 2, 8 and 9

PET: 1670 dtex, (twisting structure (both ply-twisting and cable-twisting)) 1670 dtex/2 and the twisting number of 39 turns/10 cm, (Strength of the twisted cord) 238 N, (intermediate elongation of the twisted cord under a load of 66 N) 11.8%, (Thermal shrinkage factor) 7.0% (Moreover, the pretreated PET yarn previously surface-modified by using an epoxy compound as a pretreatment is used to obtain a clear result.)

### Examples 4, 5, 10 and 11, and Comparative Examples 3, 4, 10 and 11

Nylon 66: 1400 dtex, (twisting structure (both ply-twisting and cable-twisting)) 1400 dtex/2 and the twisting number of 39 turns/10 cm, (Strength of the twisted cord) 235 N, (intermediate elongation of the twisted cord under a load of 66 N) 12.1%, (Thermal shrinkage factor) 8.0%

### Examples 6 and 7, and Comparative Examples 5-7

Rayon: 1840 dtex, (twisting structure (both ply-twisting and cable-twisting)) 1840 dtex/2 and the twisting number of 47 turns/10 cm, (Strength of the twisted cord) 152 N, (intermediate elongation of the twisted cord under a load of 44 N) 3.0%

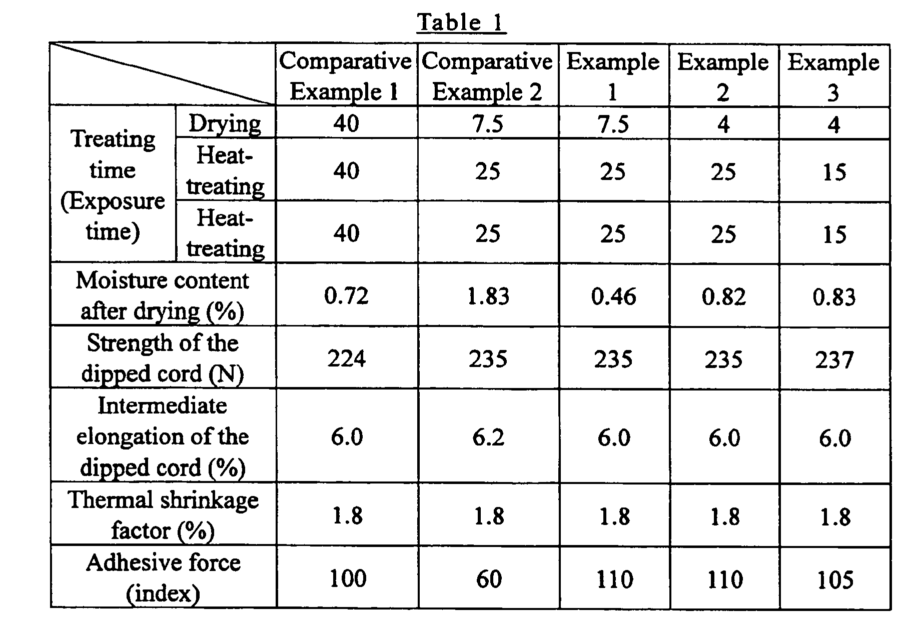

In the conventional modification method shown in FIG. 4, the adhesive is not dried when the drying time is not more than 30 seconds (Comparative example 2). In this case, the heat treatment is conducted under the undried condition, so that it is seen that the adhesive is unevenly attached and the uniform adhesion and sufficient adhesive force cannot be obtained.

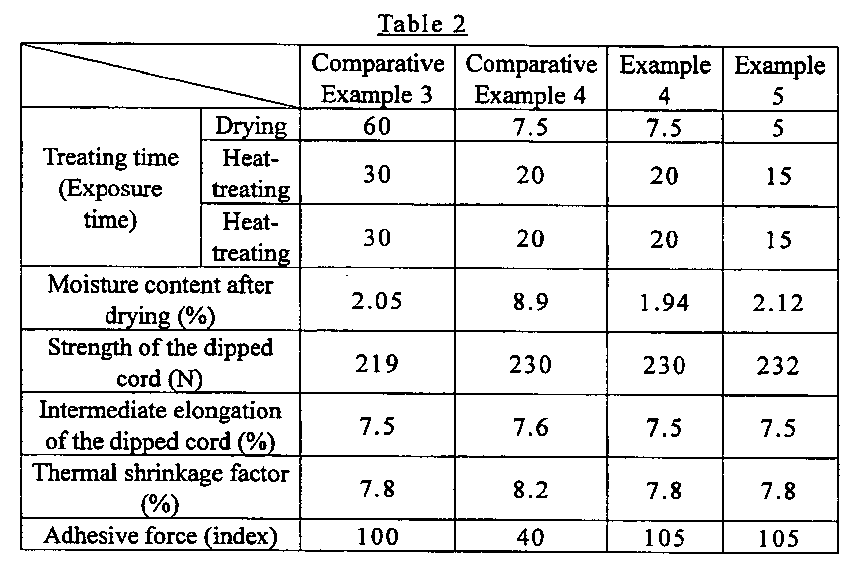

In the conventional modification method shown in FIG. 4, the adhesive is not dried when the drying time is not more than 30 seconds (Comparative example 4). In this case, the heat treatment is conducted under the undried condition like the comparative example 2, so that it is seen that the adhesive is unevenly attached and the uniform adhesion and sufficient adhesive force cannot be obtained.

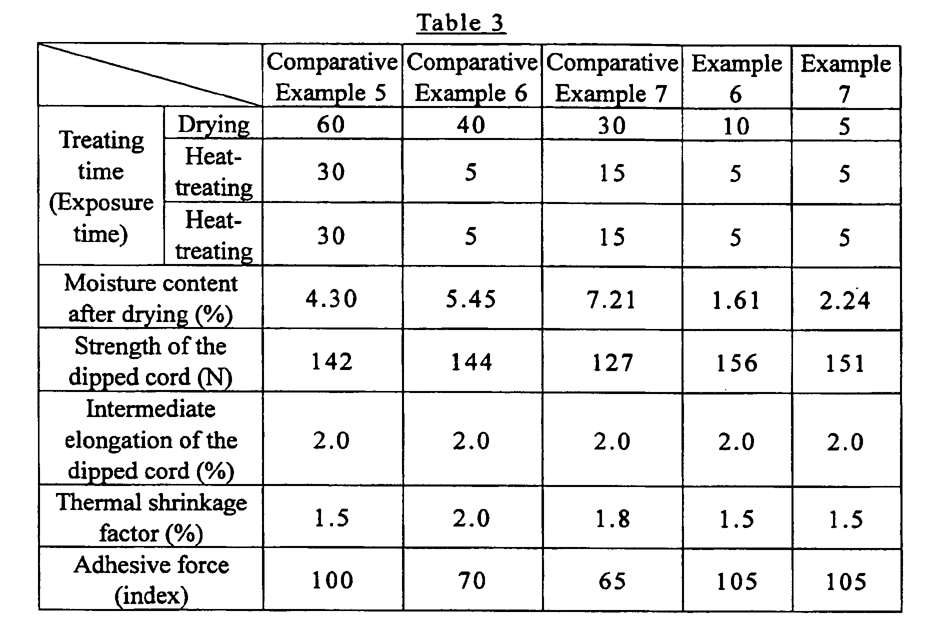

In the conventional modification method shown in FIG. 4, the adhesive is not dried when the drying time is not more than 30 seconds (Comparative example 7). In this case, the heat treatment is conducted under the undried condition like the comparative examples 2 and 4, so that it is seen that the adhesive is unevenly attached and the uniform adhesion and sufficient adhesive force cannot be obtained.

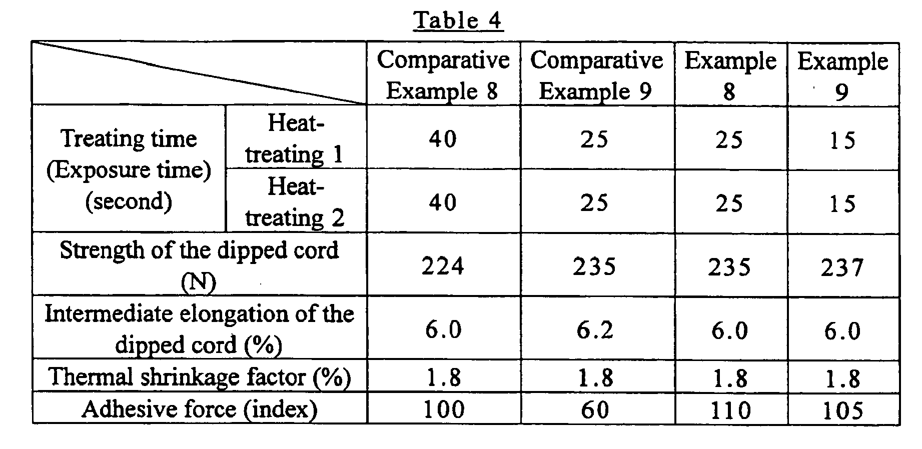

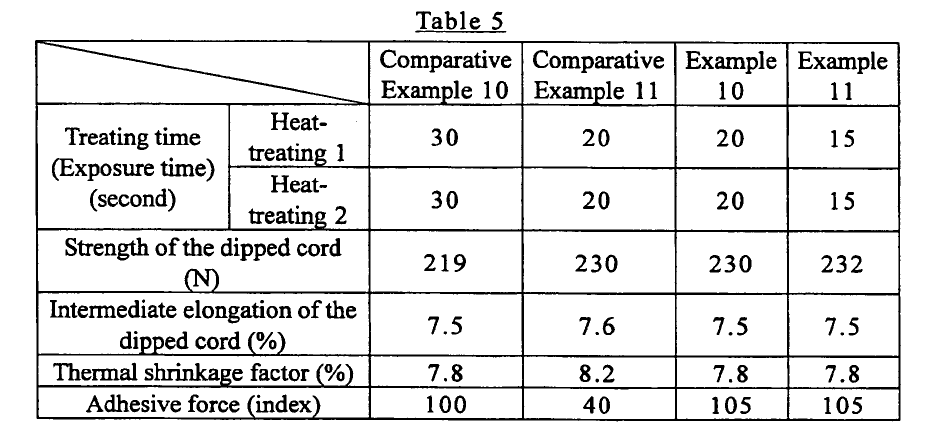

As seen from the results of Tables 4 and 5, it is confirmed that the modified cord of the examples wherein the heat-treating step is conducted by using the far-infrared rays radiation device comprising the hot air generator and the ceramic plate has an excellent adhesive force as compared with the comparative examples.

## Claims

1. A method for modifying an organic fiber cord for tire reinforcement formed by twisting organic fibers, which comprises the steps of:
dipping the organic fiber cord into an adhesive;
drying the dipped organic fiber cord; and
heat-treating the dried organic fiber cord to modify it,
wherein the drying step is conducted by irradiating microwaves to the dipped organic fiber cord.

2. A method for modifying an organic fiber cord for tire reinforcement formed by twisting organic fibers, which comprises the steps of:
dipping the organic fiber cord into an adhesive;
drying the dipped organic fiber cord; and
heat-treating the dried organic fiber cord to modify it,
wherein the heat-treating step is conducted by irradiating far-infrared rays to the dried organic fiber cord.

3. A method for modifying an organic fiber cord for tire reinforcement formed by twisting organic fibers, which comprises the steps of:
dipping the organic fiber cord into an adhesive;
drying the dipped organic fiber cord; and
heat-treating the dried organic fiber cord to modify it,
wherein the drying step is conducted by irradiating microwaves to the dipped organic fiber cord and the heat-treating step is conducted by irradiating far-infrared rays to the dried organic fiber cord.

4. A method for modifying an organic fiber cord according to any one of claims 1-3, wherein 1-250 single cords not having a weft are simultaneously modified as the organic fiber cord.

5. A method for modifying an organic fiber cord according to any one of claims 1-3, wherein an amount of the adhesive attached in the dipping step is controlled to a constant amount by aspirating the adhesive attached to the organic fiber cords by the dipping.

6. A method for modifying an organic fiber cord according to any one of claims 1-3, wherein the modification is conducted with keeping a moisture content of the organic fiber cord over 0.1 %.

7. A method for modifying an organic fiber cord according to claim 1 or 3, wherein an amount of moisture in the organic fiber cords after the drying is controlled by measuring the amount of moisture after the drying step and automatically varying an output power of the microwaves.

8. A method for modifying an organic fiber cord according to claim 2 or 3, wherein hot air is forcedly circulated in a heat-treating furnace used in the heat-treating step to control an output power of the far-infrared rays through a temperature in the furnace.

9. A method for modifying an organic fiber cord according to claim 2 or 3, wherein the heat-treating step is conducted by using a far-infrared rays-treating furnace comprising a hot air generator and a ceramic plate and irradiating far-infrared rays to the dried organic fiber cords.

## Patentansprüche

1. Verfahren zur Modifizierung eines organischen Faserkords zum Verstärken von Reifen, der durch Verdrallen organischer Fasern gebildet wird, welches die Schritte umfasst des:
Eintauchens des organischen Faserkords in einen Klebstoff;
Trocknens des eingetauchten organischen Faserkords; und
Hitzebehandelns des getrockneten organischen Faserkords, um ihn zu modifizieren,
wobei der Trocknungsschritt durch Aufstrahlen von Mikrowellen auf den eingetauchten organischen Faserkord durchgeführt wird.

2. Verfahren zur Modifizierung eines organischen Faserkords zum Verstärken von Reifen, der durch Verdrallen organischer Fasern gebildet wird, welches die Schritte umfasst des:
Eintauchens des organischen Faserkords in einen Klebstoff;
Trocknens des eingetauchten organischen Faserkords; und
Hitzebehandelns des getrockneten organischen Faserkords, um ihn zu modifizieren,
wobei der Hitzebehandlungsschritt durch Aufstrahlen von Fern-Infrarotstrahlen auf den getrockneten organischen Faserkord durchgeführt wird.

3. Verfahren zur Modifizierung eines organischen Faserkords zum Verstärken von Reifen, der durch Verdrallen organischer Fasern gebildet wird, welches die Schritte umfasst des:
Eintauchens des organischen Faserkords in einen Klebstoff;
Trocknens des eingetauchten organischen Faserkords; und
Hitzebehandelns des getrockneten organischen Faserkords, um ihn zu modifizieren,
wobei der Trocknungsschritt durch Aufstrahlen von Mikrowellen auf den eingetauchten organischen Faserkord durchgeführt wird und der Erhitzungsschritt durch Aufstrahlen von Fern-Infrasrotstrahlen auf den getrockneten organischen Faserkord durchgeführt wird..

4. Verfahren zur Modifizierung eines organischen Faserkords nach einem der Ansprüche 1 bis 3, wobei 1 bis 250 einzelne Korde, die keinen Schuss aufweisen, gleichzeitig als der organische Faserkord modifiziert werden.

5. Verfahren zur Modifizierung eines organischen Faserkords nach einem der Ansprüche 1 bis 3, wobei eine Menge des Klebstoffs, der im Eintauchschritt aufgebracht wird, durch Aufsaugen des durch das Eintauchen auf die organischen Faserkorde aufgebrachten Klebstoffs auf eine konstante Menge reguliert wird.

6. Verfahren zur Modifizierung eines organischen Faserkords nach einem der Ansprüche 1 bis 3, wobei die Modifikation unter Halten des Feuchtigkeitsgehalts des organischen Faserkords bei über 0,1 % durchgeführt wird.

7. Verfahren zur Modifizierung eines organischen Faserkords nach Anspruch 1 oder 3, wobei die Menge an Feuchtigkeit in den organischen Faserkorden nach dem Trocknen durch Messen der Menge an Feuchtigkeit nach dem Trocknungsschritt und automatisches Variieren einer Abgabeleistung der Mikrowellen reguliert wird.

8. Verfahren zur Modifizierung eines organischen Faserkords nach Anspruch 2 oder 3, wobei Heißluft erzwungenerweise in einem Hitzebehandlungsofen zirkuliert wird, der im Hitzebehandlungsschritt eingesetzt wird, um eine Abgabeleistung der Fern-Infrarotstrahlen durch eine Temperatur in dem Ofen zu regulieren.

9. Verfahren zur Modifizierung eines organischen Faserkords nach Anspruch 2 oder 3, wobei der Hitzebehandlungsschritt durch Einsetzen eines Fern-Infrarotstrahlen-Behandlungsofens durchgeführt wird, der einen Heißluftgenerator und eine Keramikplatte umfasst, und Fern-Infrarotstrahlen auf die getrockneten organischen Faserkorde aufgestrahlt werden.

## Revendications

1. Procédé pour modifier un cordon en fibres organiques pour le renforcement d'un pneu, formé en torsadant des fibres organiques, qui comprend les étapes consistant:
à immerger le cordon en fibres organiques dans un adhésif;
à sécher le cordon en fibres organiques immergé; et
à thermo-traiter le cordon en fibres organiques séché pour le modifier,
dans lequel l'étape de séchage est effectuée en irradiant des micro-ondes sur le cordon en fibres organiques immergé.

2. Procédé pour modifier un cordon en fibres organiques pour le renforcement d'un pneu, formé en torsadant des fibres organiques, qui comprend les étapes consistant:
à immerger le cordon en fibres organiques dans un adhésif;
à sécher le cordon en fibres organiques immergé; et
à thermo-traiter le cordon en fibres organiques séché pour le modifier,
dans lequel l'étape de thermo-traitement est effectuée en irradiant des rayons infrarouges lointains sur le cordon en fibres organiques séché.

3. Procédé pour modifier un cordon en fibres organiques pour le renforcement d'un pneu, formé en torsadant des fibres organiques, qui comprend les étapes consistant:
à immerger le cordon en fibres organiques dans un adhésif;
à sécher le cordon en fibres organiques immergé; et
à thermo-traiter le cordon en fibres organiques séché pour le modifier,
dans lequel l'étape de séchage est effectuée en irradiant des micro-ondes sur le cordon en fibres organiques immergé et l'étape de thermo-traitement est effectuée en irradiant des rayons infrarouges lointains sur le cordon en fibres organiques séché.

4. Procédé pour modifier un cordon en fibres organiques selon l'une quelconque des revendications 1 à 3, dans lequel 1 à 250 cordons uniques n'ayant pas de trame sont simultanément modifiés sous la forme du cordon en fibres organiques.

5. Procédé pour modifier un cordon en fibres organiques selon l'une quelconque des revendications 1 à 3, dans lequel une quantité de l'adhésif attaché dans l'étape d'immersion est contrôlée à une quantité constante en aspirant l'adhésif attaché aux cordons en fibres organiques par l'immersion.

6. Procédé pour modifier un cordon en fibres organiques selon l'une quelconque des revendications 1 à 3, dans lequel la modification est effectuée en maintenant une teneur en eau du cordon en fibres organiques au-dessus de 0, 1 %.

7. Procédé pour modifier un cordon en fibres organiques selon la revendication 1 ou 3, dans lequel une quantité d'eau dans les cordons en fibres organiques après le séchage est contrôlée en mesurant la quantité d'humidité après l'étape de séchage et en faisant varier automatiquement une puissance de sortie des micro-ondes.

8. Procédé pour modifier un cordon en fibres organiques selon la revendication 2 ou 3, dans lequel de l'air chaud est circulé par force dans un four de thermo-traitement utilisé dans l'étape de thermo-traitement pour contrôler une puissance de sortie des rayons infrarouges lointains par une température dans le four.

9. Procédé pour modifier un cordon en fibres organiques selon la revendication 2 ou 3, dans lequel l'étape de thermo-traitement est effectuée en utilisant un four de traitement par rayons infrarouges lointains comprenant un générateur d'air chaud et une plaque céramique et en irradiant des rayons infrarouges lointains sur les cordons en fibres organiques séchés.
